# EUROPEAN PATENT APPLICATION

(11) **EP 4 328 887 A1**
(43) Date of publication of application: **28.02.2024**
(21) Application number: 22791395.1
(22) Date of filing: 11.03.2022
(51) Int. Cl.: G08G 1/00, B25J 5/00, B25J 13/00, G01C 21/34, G05D 1/02, G16Y 10/40, G16Y 40/60

(54) **MOVING BODY, WASTE COLLECTION SYSTEM, AND CONTROL DEVICE**

(30) Priority: 23.04.2021 JP 2021073009
(71) Applicant: MITSUBISHI ELECTRIC CORPORATION, Chiyoda-ku Tokyo 100-8310 (JP)
(72) Inventor: CHIBA, Yohei, Tokyo 100-8310 (JP); YOSHIDA, Michinori, Tokyo 100-8310 (JP)
(74) Representative: Hoffmann Eitle
(86) International application number: PCT/JP2022/010804
(87) International publication number: WO 2022/224614

(57) **Abstract**

A waste collection system (1000) includes a movable waste box (100) to automatically travel by using a sensor group including cameras (181), a sonar (182), a millimeter wave radar (183), and a LiDAR (184), and a supervision apparatus (200) to manage the movable waste box (100). The movable waste box (100) autonomously moves by following path information (201a) indicating a path. The movable waste box (100) includes a waste box (120) to accept waste a person who is present partway on a path has. The supervision apparatus (200) includes a path information generating unit (201) to generate the path information (201a) and to transmit the path information (201a) to the movable waste box (100).

## Description

### Technical Field

The present disclosure relates to a movable waste box as an autonomously-movable moving body, a waste collection system including the movable waste box, and a supervision apparatus which controls the movable waste box.

### Background Art

In conventional technology, there is disclosed a waste collection management system including an acquiring unit which acquires request information regarding a waste collection request from a user, a determining unit which determines the presence or absence of an addressing moving body which can address the request information, a generating unit which generates a dispatch instruction for dispatching the addressing moving body to a collection point based on the request information when the addressing moving body is present, and a guiding unit which guides the addressing moving body to the collection point based on the dispatch instruction and causes the addressing moving body to perform collection of target waste as a target for a collection request. Here, the addressing moving body is a waste collection vehicle and automatic driving vehicle (for example, Patent Literature 1).

### Citation List

### Patent Literature

Patent Literature 1: JP 2020-87134

In the system of Patent Literature 1, in response to the request information from the user, a collection moving body for waste collection as an automatic driving vehicle is dispatched. However, in a place such as a tourist site or theme park, when waste such as a vacant PET bottle is desired to be thrown away, it is burdensome to take the trouble to call a waste collection vehicle, a wait time is also a nuisance, and the eyes of the surrounding people are also annoying. Thus, when waste is desired to be thrown away, a situation is preferable in which a movable waste box is making the rounds to allow waste to be thrown away.

### Summary of Invention

### Technical Problem

An object of the present disclosure is to save the trouble of having to call a collection moving body for collecting waste and then wait for arrival of the collection moving body.

### Solution to Problem

The present disclosure relates to a moving body to collect waste. The moving body according to the present disclosure, includes:
a control device having a movement control unit to cause the moving body to autonomously move by following path information indicating a path; and
a waste box to accept waste a person who is present, partway on the path, on the path or along the path has.

### Advantageous Effects of Invention

According to the present disclosure, it is possible to save the trouble of having to call a collection moving body for collecting waste and then wait for arrival of the collection moving body.

### Brief Description of Drawings

Fig. 1 is a diagram of Embodiment 1, illustrating the system configuration of a waste collection system 1000.
Fig. 2 is a diagram of Embodiment 1, illustrating the external appearance of a movable waste box 100 included in the waste collection system 1000.
Fig. 3 is a diagram of Embodiment 1, illustrating a tourist site 400 where the movable waste box 100 is used.
Fig. 4 is a diagram of Embodiment 1, illustrating a specific configuration of the waste collection system 1000.
Fig. 5 is a diagram of Embodiment 1, illustrating each device mounted on the movable waste box 100.
Fig. 6 is a diagram of Embodiment 1, illustrating the hardware configuration of a control device 110.
Fig. 7 is a diagram of Embodiment 1, illustrating the hardware configuration of a supervision apparatus 200.
Fig. 8 is a diagram of Embodiment 1, illustrating a path on the tourist site 400 of which the movable waste box 100 makes the rounds.
Fig. 9 is a diagram of Embodiment 2, illustrating a configuration in which the supervision apparatus 200 includes a human stream information generating unit 203.
Fig. 10 is a diagram of Embodiment 2, illustrating the hardware configuration of the supervision apparatus 200.
Fig. 11 is a diagram of Embodiment 2, illustrating Type A to Type E as generation types of human stream information 13 by the human stream information generating unit 203.
Fig. 12 is a diagram of Embodiment 2, illustrating number lines indicating values V of the human stream information 13.
Fig. 13 is a diagram of Embodiment 2, illustrating path information formed of an undercrowded path, an intermediate density path with a value V31, an intermediate density path with a value V32, an overcrowded path, and an intermediate density path with the value V32.
Fig. 14 is a diagram of Embodiment 3, illustrating a configuration in which the supervision apparatus 200 includes a supervision-side alert unit 204.
Fig. 15 is a diagram of Embodiment 3, illustrating the hardware configuration of the control device 110.
Fig. 16 is a diagram of Embodiment 3, illustrating the hardware configuration of the supervision apparatus 200.
Fig. 17 is a diagram of Embodiment 4, illustrating a configuration in which the supervision apparatus 200 includes a speech response unit 205.
Fig. 18 is a diagram of Embodiment 4, illustrating the hardware configuration of the control device 110.
Fig. 19 is a diagram of Embodiment 4, illustrating the hardware configuration of the supervision apparatus 200.
Fig. 20 is a diagram of Embodiment 4, illustrating an operation sequence of the waste collection system 1000 when call information is transmitted from a movable terminal a tourist 410 has.
Fig. 21 is a diagram of Embodiment 4, illustrating an operation sequence of the waste collection system 1000 when the tourist 410 speaks to the movable waste box 100.

### Description of Embodiments

In the description and the drawings of the embodiments, the same components and corresponding components are provided with the same reference character. Description of the components provided with the same reference character is omitted or simplified as appropriate. In the following embodiments, a "unit" may be read as a "circuit", "step", "procedure", "process", or "circuitry" as appropriate.

### Embodiment 1.

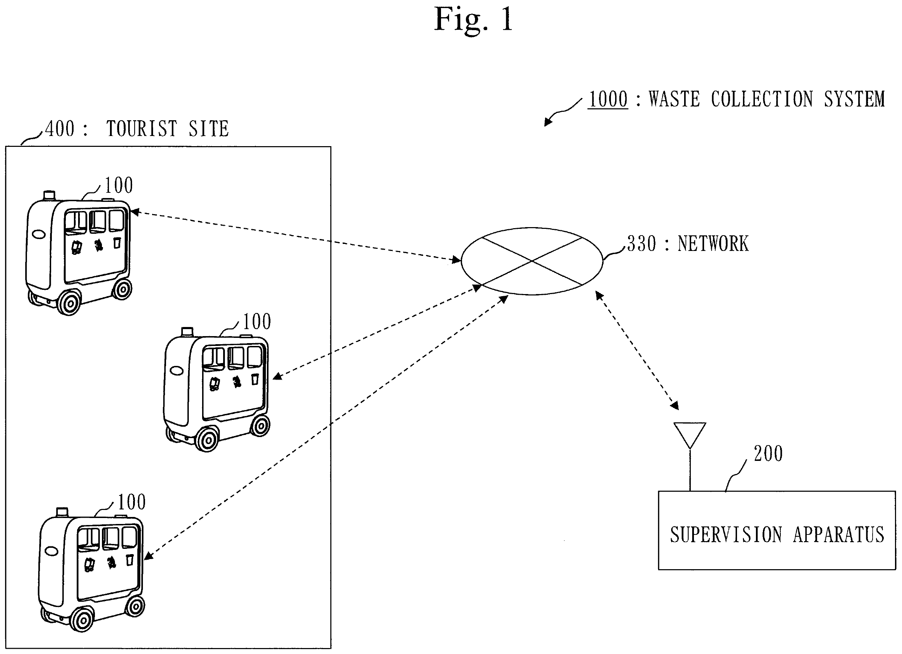

A waste collection system 1000 of Embodiment 1 is described with reference to Fig. 1 to Fig. 8.

### ***Description of Configuration***

Fig. 1 illustrates the system configuration of the waste collection system 1000.

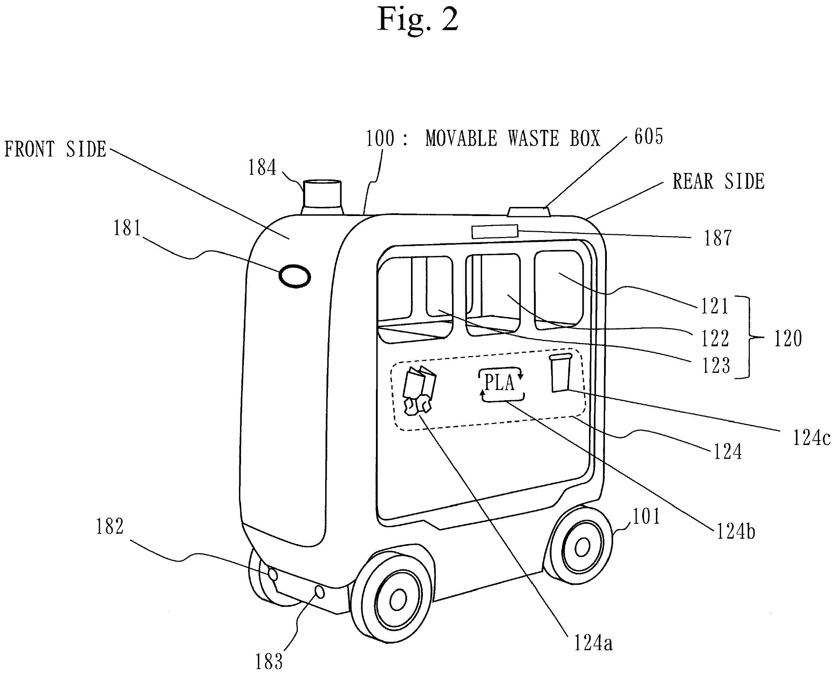

Fig. 2 illustrates an external appearance of a movable waste box 100 included in the waste collection system 1000.

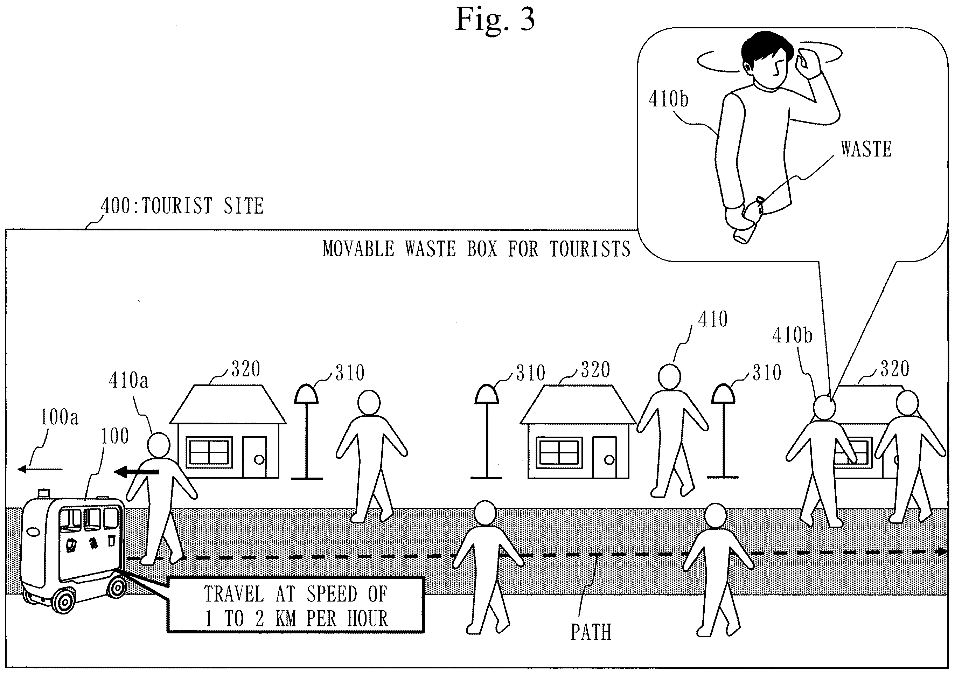

Fig. 3 illustrates a tourist site 400 where the movable waste box 100 is used.

### <Waste Collection System 1000>

As illustrated in Fig. 1, the waste collection system 1000 includes a plurality of movable waste boxes 100 and a supervision apparatus 200. Each movable waste box 100 and the supervision apparatus 200 communicate via a network 330. The movable waste box 100 receives path information 201a transmitted from a path information generating unit 201 of the supervision apparatus 200, and autonomously moves by following the path information 201a. Note that the path information generating unit 201 transmits the path information 201a via a communication interface 960B, which will be described below. The movable waste box 100 is referred to as an AMR (autonomous mobile robot). The movable waste box 100 is used on a site such as a tourist site or theme park. In the following description, the movable waste box 100 is described when used on the tourist site 400, by way of example. The movable waste box 100 makes the rounds of the tourist site 400.

### <Waste Box 120>

As illustrated in Fig. 2, the movable waste box 100 includes a waste box 120. The movable waste box 100 moves with four tires 101. Note in Fig. 2 that the right rear tire 101 is not viewed. Also, the movable waste box 100 includes, in addition to the waste box 120, various sensors for autonomous movement such as a GNSS antenna 605, cameras 181, a sonar 182, a millimeter wave radar 183, and a LiDAR 184, and these sensors will be described further below. The waste box 120 is formed of a separate waste box 121, a separate waste box 122, and a separate waste box 123. A different waste box has an opening formed, and waste can be put from the opening. On a side surface of the movable waste box 100, a waste type of the separate waste box is displayed, such as burnable waste 124a, plastic waste 124b, drinking cup waste 124c. The display of burnable waste 124a corresponds to the separate waste box 121, the display of plastic waste 124b corresponds to the separate waste box 122, and the display of drinking cup waste 124c corresponds to the separate waste box 123.

In Fig. 3, a plurality of tourists are walking on a certain tourist site where a plurality of shops 320 are present. The movable waste box 100 travels around the tourist site 400 at a speed on the order of 1 km per hour or 2 km per hour. The movable waste box 100 makes the rounds of the tourist site 400 by following a path indicated by the path information 201a. In the vicinity of each shop 320, a street camera 310 is installed. Images taken by the street cameras 310 can be used for processing such as generation of human stream information 13 and waste extraction, which will be described further below.

### <Configuration of Waste Collection System 1000>

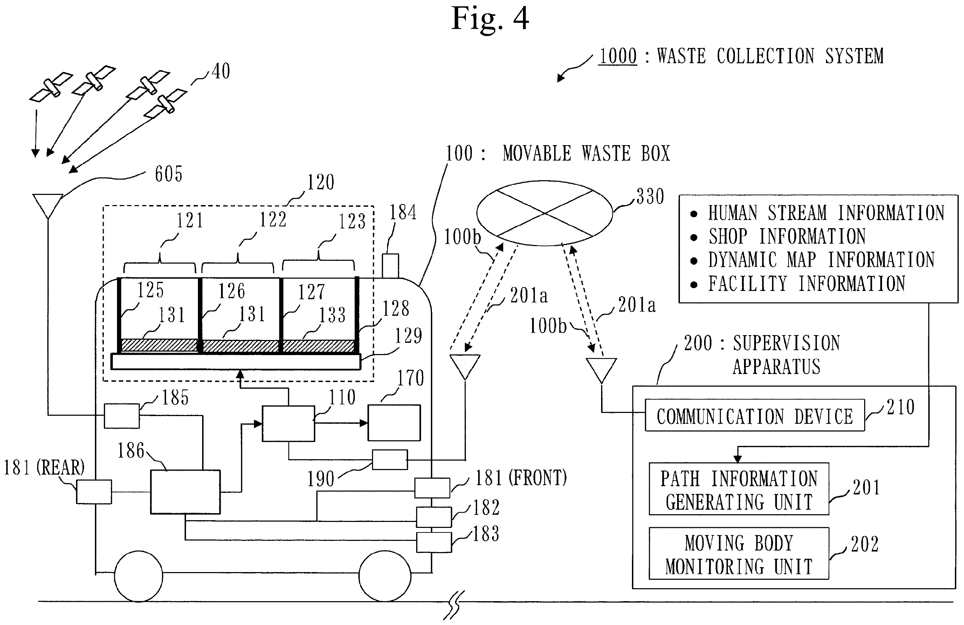

Fig. 4 illustrates a specific configuration of the waste collection system 1000. The movable waste box 100 includes a control device 110, the waste box 120, and the sensor group including the cameras 181. The movable waste box 100 receives a positioning signal from a GNSS satellite 40 to measure a position, and performs self position estimation by using the positioning result and the measurement result of the sensor group. The supervision apparatus 200 communicates with the movable waste box 100 via the network 330. The control device 110 transmits waste collection information 100b indicating a situation of waste collection to the supervision apparatus 200 via the network 330. The supervision apparatus 200 transmits the path information 201a to the movable waste box 100. The path information generating unit 201 of the supervision apparatus 200 acquires, from outside the supervision apparatus 200, information about human streams, shop information, dynamic map information, and information about facilities. The movable waste box 100 and the supervision apparatus 200 are specifically described below.

### <Devices Mounted on Movable Waste Box 100>

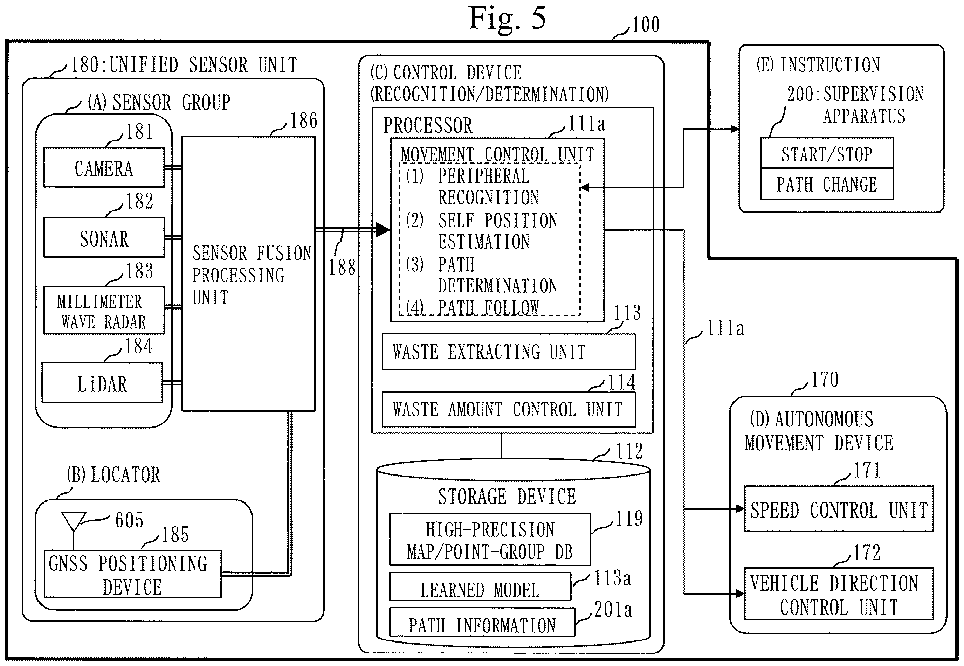

Fig. 5 illustrates each device mounted on the movable waste box 100. The movable waste box 100 includes the control device 110, an autonomous movement device 170, and a unified sensor unit 180.

### <Unified Sensor Unit 180>

The unified sensor unit 180 includes the GNSS antenna 605, the cameras 181, the sonar 182, the millimeter wave radar 183, the LiDAR 184, a GNSS positioning device 185, and a sensor fusion unit 186. The unified sensor unit 180 is a unit which measures data for the movable waste box 100 to autonomously move. As illustrated in Fig. 4, the cameras 181 are installed on a front side and a rear side. Those from the cameras 181 to the LiDAR 184 may be represented as a sensor group. The GNSS antenna 605 is connected to the GNSS positioning device 185 to configure a locator (position assessment device). Measurement data of the sensor group and the positioning result of the GNSS positioning device 185 are inputted to the sensor fusion unit 186. The sensor fusion unit 186 inputs unified information 188 acquired by unifying the inputted data to a movement control unit 111.

### <Control Device 110>

The control device 110 is a device which controls autonomous movements of the movable waste boxes 100 and also supports waste collection to the waste boxes 120. The control device 110 includes the movement control unit 111, a storage device 112, a waste extracting unit 113, and a waste amount control unit 114. The movement control unit 111 has unified information 188 inputted from the unified sensor unit 180. Based on the unified information 188, the path information 201a held in the storage device 112, and an instruction from the supervision apparatus 200, the movement control unit 111 generates autonomous movement control information 111a for the autonomous movement device 170 to cause any movable waste box 100 to autonomously move. The waste extracting unit 113 extracts waste by using the sensor group. Waste extraction will be described further below. The waste amount control unit 114 monitors the accommodation capacity of waste of the separate waste box 121, the separate waste box 122, and the separate waste box 123. The storage device 112 has stored therein a high-precision map received from the supervision apparatus 200 and point-group data measured by the LiDAR 184, and has them held in a high-precision map and point-group database (high-precision map/point-group DB) 119. Also, the storage device 112 has stored therein learned model 113a and the path information 201a received from the supervision apparatus 200. The storage device 112 is implemented by an auxiliary storage device 930A.

### <Autonomous Movement Device 170>

The autonomous movement device 170 causes any movable waste box 100 to autonomously move based on the autonomous movement control information 111a. Specifically, the autonomous movement device 170 causes the movable waste box 100 to autonomously move by controlling a traveling mechanism included in the movable waste box 100, such as a motor or steering mechanism not illustrated in the drawings. Note that each movable waste box 100 has a battery as a motive power source and each movable waste box 100 is so called an electric automobile.

### <Hardware Configuration of Control Device 110>

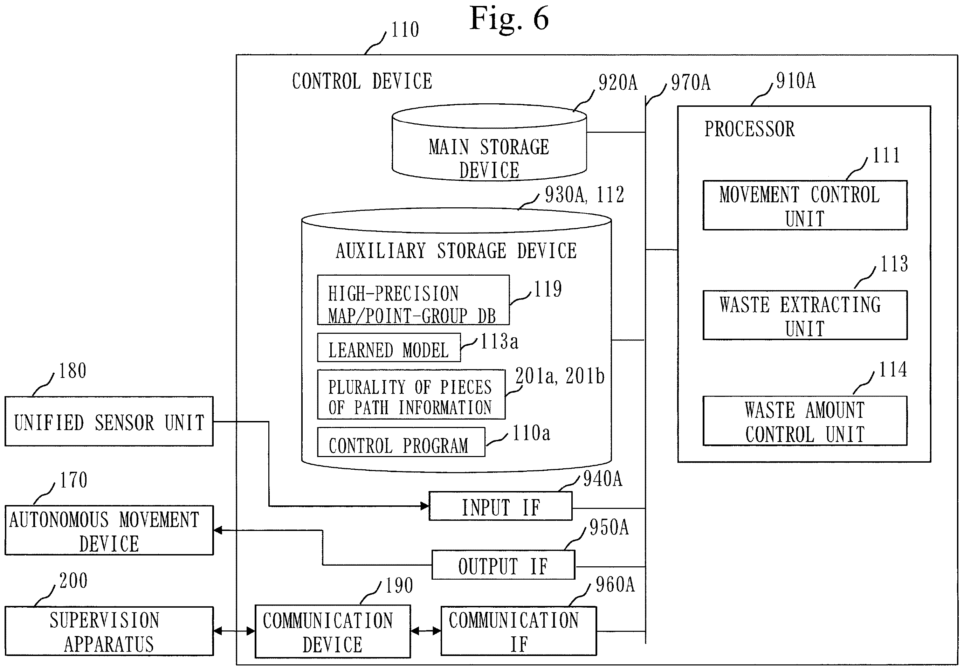

Fig. 6 illustrates the hardware configuration of the control device 110. The control device 110 is a computer. The control device 110 includes a processor 910A. The control device 110 includes, in addition to the processor 910A, other hardware including a main storage device 920A, the auxiliary storage device 930A, an input interface 940A, an output interface 950A, and a communication interface 960A. The processor 910A is connected to the other hardware via a signal line 970A to control the other hardware.

The control device 110 includes the movement control unit 111, the waste extracting unit 113, and the waste amount control unit 114 as functional components. The functions of the movement control unit 111, the waste extracting unit 113, and the waste amount control unit 114 are implemented by a control program 110a.

The processor 910A is a device which executes the control program 110a. The control program 110a is a program which implements the functions of the movement control unit 111, the waste extracting unit 113, and the waste amount control unit 114. The processor 910A is an IC (Integrated Circuit) which performs arithmetic process. Specific examples of the processor 910A are a CPU (Central Processing Unit), a DSP (Digital Signal Processor), and a GPU (Graphics Processing Unit).

Specific examples of the main storage device 920A are an SRAM (Static Random Access Memory) and a DRAM (Dynamic Random Access Memory). The main storage device 920A retains arithmetic operation results of the processor 910A.

The auxiliary storage device 930A is a non-volatile storage device which retains data. A specific example of the auxiliary storage device 930A is an HDD (Hard Disk Drive). Also, the auxiliary storage device 930A may be a portable recording medium such as an SD (registered trademark) (Secure Digital) memory card, NAND flash, flexible disk, optical disk, compact disk, Blu-ray (registered trademark) disk, or DVD (Digital Versatile Disk). The auxiliary storage device 930A has stored therein the high-precision map and point-group database 119, the learned model 113a, the path information 201a, and the control program 110a.

The input interface 940A is a port to which data is inputted from each device. To the input interface 940A, the unified sensor unit 180 is connected. The output interface 950A is a port to which various devices are connected and through which data is caused by the processor 910A to be outputted to various devices. To the output interface 950A, the autonomous movement device 170 is connected. The communication interface 960A is a communication port for the processor to communicate with another device. To the communication interface 960A, a communication device 190 is connected. Via the communication device 190, the control device 110 communicates with the supervision apparatus 200. Specifically, with the communication device 190 communicating with a communication device 210, which will be described further below, included in the supervision apparatus 200, communication between the control device 110 and the supervision apparatus 200 is established.

The control device 110 may include a plurality of processors which replace the processor 910A. The plurality of these processors share execution of the control program 110a. As with the processor 910A, each processor is a device which executes the control program 1 10a. Data, information, signal values, and variable values to be used, processed, or outputted by the control program 110a are stored in the main storage device 920A, the auxiliary storage device 930A, or a register or cache memory in the processor 910A.

The control program 110a is a program which causes a computer to perform each process, each procedure, or each step acquired by reading the "unit" of each of the movement control unit 111, the waste extracting unit 113, and the waste amount control unit 114 as a "process", "procedure", or "step".

Also, a control method is a method to be performed by the control device 110 as a computer executing the control program 110a. The control program 110a may be provided as being held in a computer-readable recording medium or may be provided as a program product.

### <Hardware Configuration of Supervision Apparatus 200>

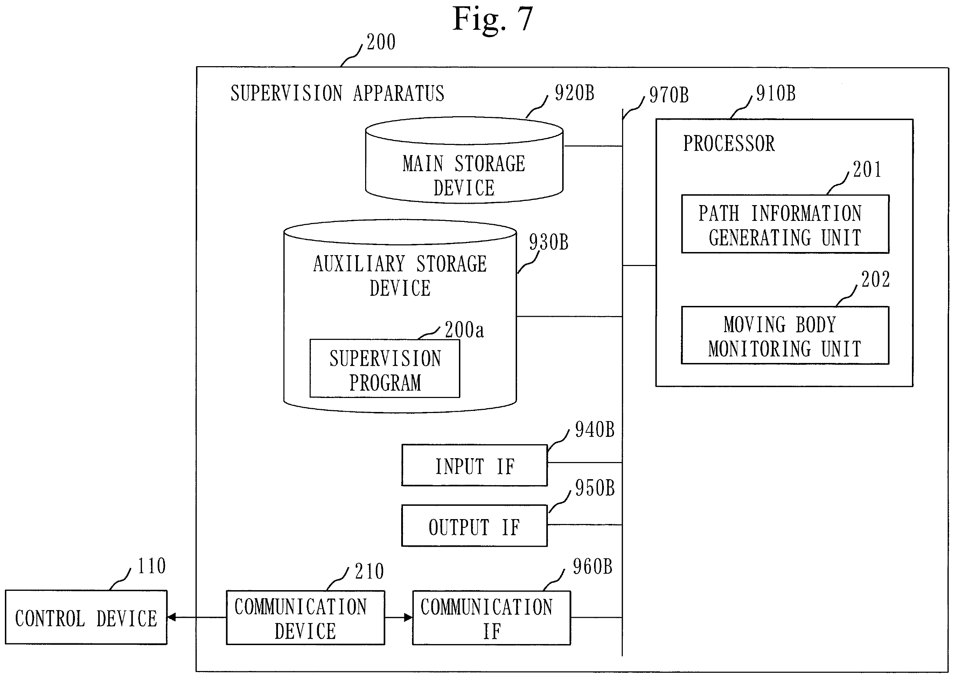

Fig. 7 illustrates the hardware configuration of the supervision apparatus 200. The supervision apparatus 200 is a computer having a configuration similar to that of the control device 110. The supervision apparatus 200 includes a processor 910B and so forth as hardware. Since the configuration of the supervision apparatus 200 of Fig. 7 is similar to that of the control device 110 of Fig. 6, as for reference characters of the processor and so forth, B is provided instead of A in Fig. 6. Only portions different from the control device 110 of Fig. 6 are described.

The supervision apparatus 200 includes the path information generating unit 201 and a moving body monitoring unit 202 as functional components. The functions of the path information generating unit 201 and the moving body monitoring unit 202 are implemented by a supervision program 200a. The supervision program 200a is executed by the processor 910B. An auxiliary storage device 930B has stored therein the supervision program 200a. The supervision program 200a is a program which causes a computer to perform each process, each procedure, or each step acquired by reading the "unit" of each of the path information generating unit 201 and the moving body monitoring unit 202 as a "process", "procedure", or "step". Also, an infection method is a method to be performed by the supervision apparatus 200 as a computer executing the supervision program 200a. The supervision program 200a may be provided as being held in a computer-readable recording medium or may be provided as a program product. To the communication interface 960B, the communication device 210 is connected. The supervision apparatus 200 communicates with the control device 110 via the communication device 210. The communication device 210 is illustrated also in Fig. 2.

### ***Operation of Movable Waste Box 100***

The operation of the movable waste box 100 is specifically described below.

### <Round by Movable Waste Box 100>

The movable waste box 100 illustrated in Fig. 2 is a moving body which collects waste. The movement control unit 111 included in the control device 110 causes the movable waste box 100 to autonomously move by following the path information 201a indicating a path.

Normally, the movable waste box 100 autonomously travels at a speed equal to or slow than 6 km per hour. For example, the movable waste box 100 travels at a speed between 1 km per hour and 2 km per hour. However, the speed of autonomous traveling is simply an example. The speed of the movable waste box 100 by autonomous traveling is not limited. The waste box 120 is a waste box which accepts waste a person who is present, partway on a path, on the path or along the path has. The movable waste box 100 travels at a low speed between 1 km per hour and 2 km per hour, and collects waste partway on a traveling path. Thus, it is possible to beautify the tourist site 400 without obstructing the tourist 410.

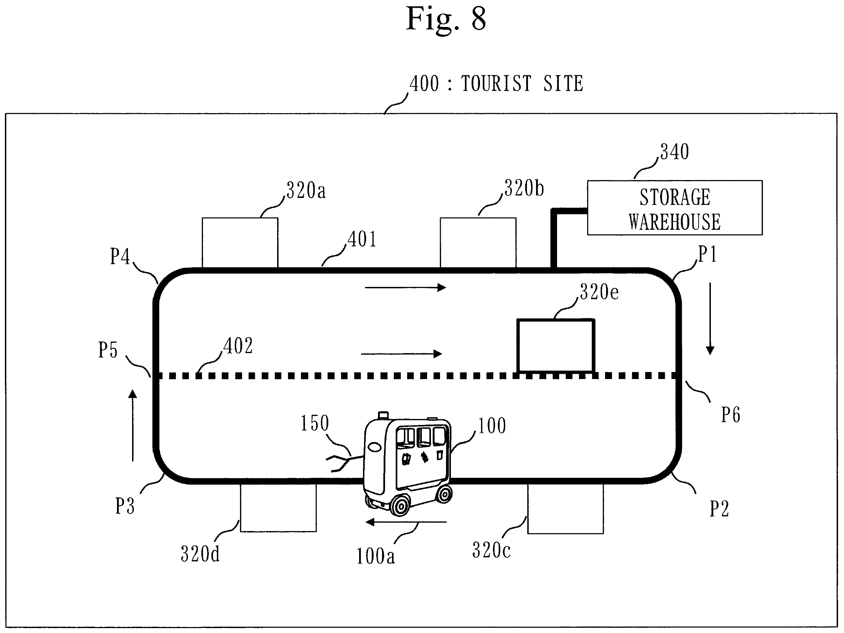

Fig. 8 illustrates a path on the tourist site 400 of which the movable waste box 100 makes the rounds. On the tourist site 400, the plurality of shops 320 are present. In Fig. 8, the plurality of shops 320 are classified into five shops from a shop 320a to a shop 320e. Normally, the movable waste box 100 follows the path information 201a to make the rounds of a path 401 specified by points P1, P2, P3, P4, and P1 in a forwarding direction 100a. As will be described further below, depending on the accommodation capacity of waste or the like, the movable waste box 100 makes the rounds of a path 402 specified by points P6, P2, P3, P6, and P6. In this case, the movable waste box 100 has path information 201b corresponding to the path 402, and can make the rounds of the path 402 by switching the path information 201a to the path information 201b.

### <Operation When Person Approaches>

The movable waste box 100 has a human sensor which detects a movement of a person. As a human sensor, the sensor group the unified sensor unit 180 has can be used. When the human sensor detects a state in which a person approaches any movable waste box 100, the movement control unit 111 causes the speed of the movable waste box 100 to be decreased. That is, as illustrated in Fig. 3, when the sensor group of the unified sensor unit 180 detects a tourist 410a approaching the movable waste box 100, the movement control unit 111 transmits, to the autonomous movement device 170, autonomous movement control information 111a including a speed reduction instruction. A speed control unit 171 follows the speed reduction instruction to decrease the speed of the movable waste box 100. For example, when the movable waste box 100 is traveling at 1 to 2 km/h per hour at normal times, the speed is decreased so that the movable waste box 100 is caused to travel at 0 to 1 km/h per hour at normal times.

The speed reduction instruction may be a stop instruction. In the case of the stop instruction, the speed control unit 171 stops the movement of the movable waste box 100.

Also, when the sensor group as a human sensor detects a state in which a person is going away from any movable waste box 100, the movement control unit 111 causes the speed of the movable waste box 100 to be increased. In this case, the movement control unit 111 transmits, to the autonomous movement device 170, autonomous movement control information 111a including a speed increase instruction. The speed control unit 171 follows the speed increase instruction to increase the speed of the movable waste box 100. For example, when the movable waste box 100 is traveling at 0 to 1 km/h per hour at normal times, the speed is decreased so that the movable waste box 100 is caused to travel at 1 to 2 km/h per hour at normal times.

Since the movable waste box 100 changes its speed with a person approaching or going away, there is an effect that the tourists 410 can easily throw waste away.

### <Path Change Based on Accommodation Capacity of Waste>

The control device 110 has a plurality of pieces of path information stored in the storage device 112. In Fig. 6, the auxiliary storage device 930A as the storage device 112 has held therein two path information, the path information 201a and the path information 201b. In accordance with the accommodation capacity of waste accumulated in the waste box 120, the movement control unit 111 selects path information from among the plurality of pieces of path information. The accommodation capacity of waste can be detected by an accommodation capacity sensor arranged in the waste box 120. Note that the accommodation capacity sensor can be replaced by a weight sensor, which will be described further below. The accommodation capacity sensor is arranged in each of the separate waste box 121, the separate waste box 122, and the separate waste box 123.

For example, when the separate waste box 121 for collecting burnable waste has waste exceeding a threshold amount of accommodatable waste, the movement control unit 111 selects the path information 201b, and makes the rounds of the path 402 (Fig. 8) by following the path information 201b. In this case, the path information 201b is associated with attribute information indicating that the amount of emission of burnable waste is small. Also, the threshold value of burnable waste is determined with a margin of waste accommodation, and waste can be collected to some extent even if burnable waste is emitted on the path 402. Process when the waste box is filled with burnable waste will be described further below. In this manner, since the movable waste box 100 changes the path depending on the accommodation capacity of waste, the waste box 120 can be effectively used.

### <Use of Learned Model 113a>

The movable waste box 100 as a moving body includes the cameras 181 as an image-taking device which takes an image of the vicinity. The auxiliary storage device 930A of the control device 110 has held therein the learned model 113a. The learned model 113a is a model for extracting waste from an image on which waste appears. The waste extracting unit 113 of the control device 110 extracts waste by using the learned model 113a from the image taken by any camera 181 and, when waste is extracted, outputs a waste extraction signal.

The waste extracting unit 113 transmits, as a waste extraction signal, an extraction notification that waste has been extracted to the supervision apparatus 200 which manages the movable waste box 100. Specifically, the waste extracting unit 113 transmits an extraction notification to the supervision apparatus 200 via the communication interface 960A. The extraction notification includes a waste extraction time and a waste extraction location. A supervision station, not illustrated in the drawings, having the supervision apparatus 200 can notify an administrator of the tourist site 400 that waste has been extracted.

Alternatively, as illustrated in Fig. 8, the movable waste box 100 may include an arm mechanism 150 which catches and accommodates waste into the waste box 120. Upon outputting a waste extraction signal, the waste extracting unit 113 may cause waste the image of which has been taken to be accommodated in the waste box 120 by using the arm mechanism 150.

As described above, since the control device 110 extracts waste by using the learned model 113a, waste can be efficiently collected.

Note that the learned model 113a is generated by the path information generating unit 201 of the supervision apparatus 200. The path information generating unit 201 learns images of waste by, for example, supervised learning, and generates the learned model 113a. The generated learned model 113a is held in the auxiliary storage device 930A of the control device 110.

### <Identification of Person with Waste>

Also, the learned model 113a may be able to extract a person such as a tourist 410b having waste illustrated in Fig. 3 from any image. The waste extracting unit 113 extracts a person having waste from any image taken by any camera 181 as an image-taking device in the vicinity of the path indicated by the path information by using the learned model 113a. When a person having waste is extracted from any image by the waste extracting unit 113, the movement control unit 111 causes the movable waste box 100 to leave the path and approach the person having waste. Specifically, the movement control unit 111 generates autonomous movement control information 111a indicating that the movable waste box 100 approaches the person having waste for output to the autonomous movement device 170.

If collection of waste from the person having waste has been confirmed by the sensor group, the movement control unit 111 causes the movable waste box 100 to be returned to the original path. Specifically, if collection of waste from the person having waste has been confirmed by the sensor group, the movement control unit 111 generates autonomous movement control information 111a for making an instruction of returning to the original path for output to the autonomous movement device 170.

In this manner, since the movable waste box 100 approaches the person having waste, the person having waste can easily throw waste away, and beautification of the tourist site 400 is improved.

### <Process on Waste Drop>

The movable waste box 100 includes a waste box monitoring device which monitors the waste box 120. The waste box monitoring device can be implemented by the sensor group such as the cameras 181, the sonar 182, the millimeter wave radar 183, and the LiDAR 184. For example, as a waste box monitoring device, as illustrated in Fig. 2, a sensor for waste drop detection 187 is arranged on an upper portion of an opening at the center of the waste box 120. The sensor 187 is configured of, for example, a camera, an infrared sensor, a sonar, an optical sensor, or the like. This sensor for waste drop detection 187 is arranged also at the same position on the right side. By using the monitoring result of the waste box monitoring device, the waste extracting unit 113 determines whether there is any waste with its position changed from the inside of the waste box 120 to the outside of the waste box 120.

Upon determining that there is any waste with its position changed from the inside of the waste box 120 to the outside of the waste box 120, the waste extracting unit 113 transmits an alert notification to the supervision apparatus 200 which manages the movable waste box 100. The alert notification includes a time and location of detection of the waste drop. The supervision station where the supervision apparatus 200 is present notifies the administrator of the tourist site 400 of the details of the alert notification. With this, beautification of the tourist site 400 is improved.

Alternatively, as illustrated in Fig. 8, the movable waste box 100 may include the arm mechanism 150 which catches and accommodates waste into the waste box 120. In this case, when determining that there is any waste with its position changed from the inside of the waste box 120 to the outside of the waste box 120, the waste extracting unit 113 identifies, based on the learned model 113a, the waste with its position changed and, by using the arm mechanism 150, causes the waste with its position changed to be collected inside of the waste box 120. With this, beautification of the tourist site 400 is improved.

Note that a waste drop determination can be made as follows.

The waste extracting unit 113 can detect a waste drop from a weight sensor installed in the waste box 120.

In Fig. 4, weight sensors 131, 132, and 133 respectively arranged in the separate waste box 121, the separate waste box 122, and the separate waste box 123 are illustrated. The weight sensors 131, 132, and 133 when collectively called are represented as a weight sensor 130.

The waste extracting unit 113 can detect waste by making a comparison between a high-precision map as a three-dimensional map and information about a point group in real time acquired by the LiDAR 184 (point-group database). This process can be used for any waste dropped on roads in general. By further using the learned model 113a, when an image corresponding to a difference in the point group is present, the waste extracting unit 113 may determine whether data of the point group represents waste.

### <Capacity Changing Mechanism of Waste Box 120>

As a waste box monitoring device, the weight sensor 130 which detects the weight of waste for each separate waste box may be arranged inside the device of the movable waste box 100. Also, an infrared sensor or the like which detects, for each separate waste box, the height of waste accumulated inside the waste box or the position of waste positioned at the highest may be arranged on a back surface of a ceiling part of the movable waste box 100. If waste of part of separate waste increases based on the detection result of the weight sensor 130, the infrared sensor, or the like, after the capacity of another separate waste box is detected, the capacity of the separate waste box with increased waste is increased. Specifically, the process is as follows. As illustrated in Fig. 2, the waste box 120 is divided into the separate waste box 121, the separate waste box 122, and the separate waste box 123 for each type of waste. The separate waste box 121, the separate waste box 122, and the separate waste box 123 can have their accommodation capacity of waste changed by control. Specifically, the process is as follows. In the waste box 120, a partition plate driving device 129 is arranged. Receiving control, the partition plate driving device 129 can move partition plates 125, 126, 127, and 128 independently to a front-rear direction of the movable waste box 100. With this, the capacities of the separate waste box 121, the separate waste box 122, and the separate waste box 123 can be changed. Via control of the partition plate driving device 129, the waste amount control unit 114 of the control device 110 controls the accommodation capacity of waste accommodatable in each separate waste box. With this, use efficiency of the waste box 120 is improved.

### ***Operation of Waste Collection System 1000***

The operation of the waste collection system 1000 is described below, with attention being paid to the supervision apparatus 200.

### <Generation of Path Information>

The movable waste box 100 illustrated in Fig. 4 autonomously moves at a speed equal to or slower than 6 km per hour by following path information indicating a path. The movable waste box 100 includes the waste box 120 which accepts waste a person who is present, partway on a path, on the path or along the path has. The supervision apparatus 200 has the path information generating unit 201 which generates path information and transmits the path information to a moving body.

The path information generating unit 201 generates path information based on streams of people in an area such as the tourist site 400 where the movable waste box 100 is scheduled to move. Human stream information 13 indicating streams of people can be acquired from the street camera 310 illustrated in Fig. 3. Alternatively, it can be acquired from an institution such as a corporation which collects the human stream information 13. The path information generating unit 201 generates path information indicating that the rounds are made in a place with many streams of people, thereby allowing waste to be efficiently collected from the tourists 410 on the tourist site 400. Note that the path information may include the human stream information 13 indicating a stream of people.

The path information generating unit 201 may generate path information based on a facility including the shops 320 arranged in an area where the movable waste box 100 is scheduled to move. Specifically, in Fig. 8, if the shop 320d and the shop 320e are popular shops where people gather, the path information generating unit 201 generates a path including the points P5, P6, P2, and P3. Since more people gather in popular shops, by including the locations of the popular shops in the path, it is possible to efficiently collect waste from the tourists 410. The path information can be acquired from a device outside the supervision apparatus 200.

The auxiliary storage device 930B has stored therein waste emission information indicating waste emission situations at a plurality of locations in the area where the movable waste box 100 is scheduled to move. The path information generating unit 201 may generate path information based on the waste emission information stored in the auxiliary storage device 930B. With the path information generating unit 201 referring to the waste emission information and generating path information including locations with large emission amounts of waste, waste can be efficiently collected. The waste emission information has recorded thereon, for example, a waste emission amount with respect to time for each location. The path information generating unit 201 can acquire the waste emission information from a device outside the supervision apparatus 200. The waste emission information includes, as described above, time information indicating a time when waste is emitted. With this, path information effective for waste collection can be generated.

Note that note that, for generation of path information, a learned model for generating path information may be used. Specifically, the process is as follows. By taking, as training data, at least any of the image taken by the street camera 310 illustrated in Fig. 3, information about human streams and so forth illustrated in Fig. 4, or times and locations when waste is emitted on the tourist site 400 and information such as waste information associated with the accommodation capacity of emitted waste acquired from outside of the supervision apparatus 200, the path information generating unit 201 learns the locations and times when more waste is emitted to generate a learned model for path information generation. By using this learned model, the path information generating unit 201 generates path information including a location and time where and when the movable waste box 100 should make the rounds in a prioritized manner.

### <Coverage of Tourist Site 400 with Plurality of Movable Waste Boxes 100>

As illustrated in Fig. 1, the waste collection system 1000 includes the plurality of movable waste boxes 100. The path information generating unit 201 generates different path information for each movable waste box 100, thereby covering waste collection on the tourist site 400 as a scheduled area where arrangement of the plurality of movable waste boxes 100 is scheduled. With this, waste on the tourist site 400 can be completely collected.

### <Arrangement of Alternate Movable Waste Box 100>

As the accommodation capacity of waste in the waste box 120 exceeds a threshold value, the movable waste box 100 transmits an excess signal to the supervision apparatus 200.

When receiving the excess signal, the path information generating unit 201 transmits a movement destination instruction for making an instruction of a movement destination to a transmission moving body, which is the movable waste box 100 transmitting the excess signal, to cause the transmission moving body to move to the movement destination. For example, the movement destination is a storage warehouse 340 illustrated in Fig. 8.

To replace the transmission moving body by the movable waste box 100 different from the transmission moving body, the path information generating unit 201 transmits path information identical to the path information transmitted to the transmission moving body to the different movable waste box 100. With this, the transmission moving body filled with waste can be changed to the different movable waste box 100.

The supervision apparatus 200 has the moving body monitoring unit 202 that monitors the movement state of the movable waste box 100 to control the movement state of the movable waste box 100 based on the monitoring result. Position information on which monitoring is based is transmitted from the movable waste box 100. The position information is associated with a presence time and a presence position. From the position information and the movable waste box 100 the image of which was taken by the street camera 310, the moving body monitoring unit 202 can control the movement state of the movable waste box 100. In this manner, by remotely controlling the movable waste box 100, the tourist site 400 can be efficiently beautified.

### ***Effects of Embodiment 1***

According to the waste collection system 1000 of Embodiment 1, the movable waste box 100 as an automatic traveling vehicle equipped with a waste box itself is caused to travel along the movement path of the tourists 410, and thus it is possible to save the tourists 410 trouble of finding a waste box, and improve beautification of the tourist site 400.

### Embodiment 2.

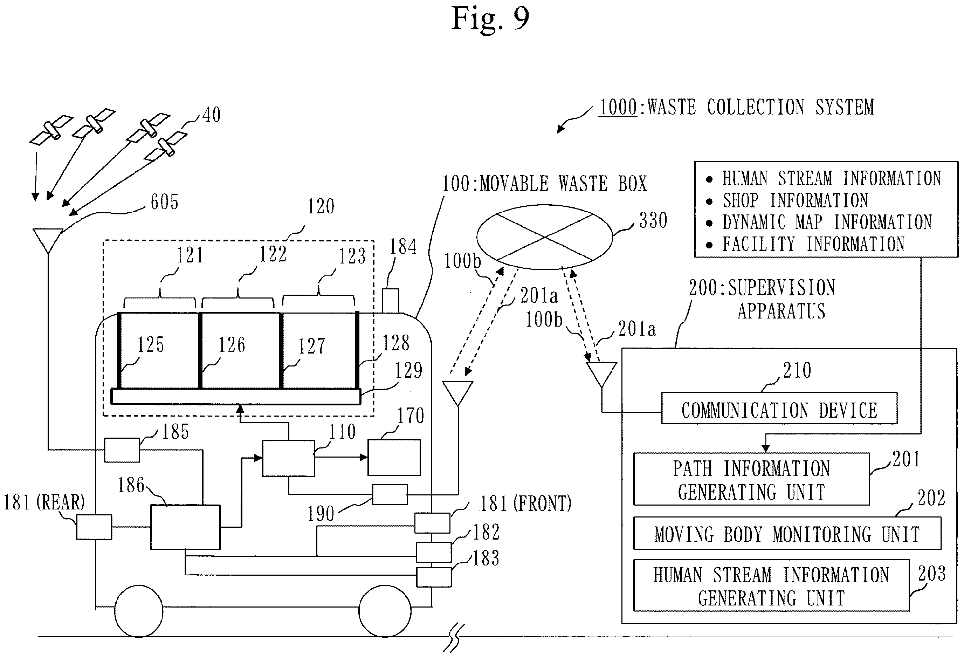

The waste collection system 1000 of Embodiment 2 is described with reference to Fig. 9 to Fig. 14. Since the waste collection system 1000 of Embodiment 2 is identical to that of Fig. 1, description is omitted. In Embodiment 2, the waste collection system 1000 includes a human stream information generating unit 203. The functions of the human stream information generating unit 203 may be arranged in the supervision apparatus 200 or may be arranged in another device different from the supervision apparatus 200 and outside the supervision apparatus 200. However, the human stream information generating unit 203 is arranged inside the waste collection system 1000. In the following, a configuration is described, by way of example, in which the supervision apparatus 200 includes the human stream information generating unit 203.

Fig. 9 illustrates the configuration in which the supervision apparatus 200 includes the human stream information generating unit 203.

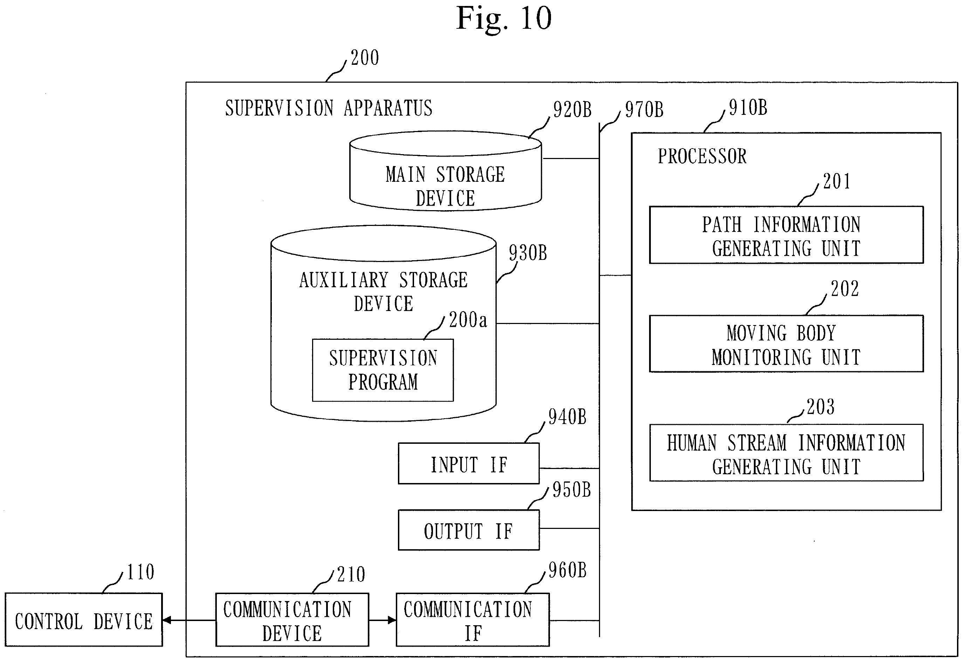

Fig. 10 illustrates the hardware configuration of the supervision apparatus 200.

### <Human Stream Information Generating Unit 203>

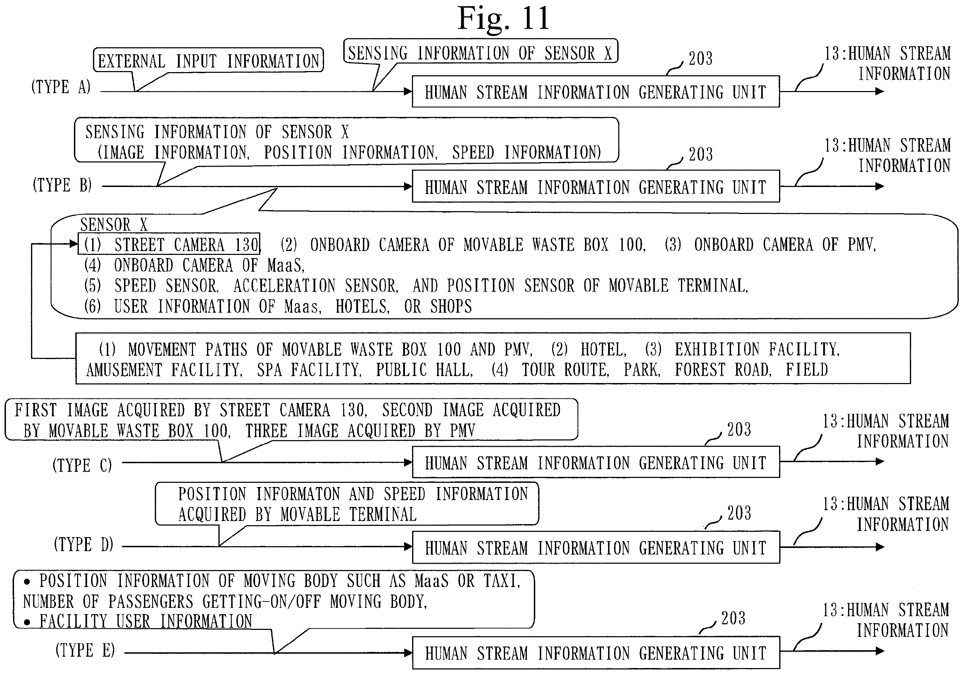

Fig. 11 illustrates Type A to Type E as generation types of human stream information 13 by the human stream information generating unit 203.

### <Type A>

The human stream information generating unit 203 generates the human stream information 13 based on information such as external input information or sensing information of a sensor X. The sensor X will be described further below.

### <Type B>

The human stream information generating unit 203 can generate the human stream information 13 from image information, position information of a person, and speed information of a person acquired by the sensor X mounted on the movable waste box 100 or the sensor X provided outside the movable waste box 100. The "sensor X provided outside the movable waste box 100" means the sensor X not mounted on the movable waste box 100.

### <Sensor X>

The sensor X is described.

The sensor X is configured of one or plurality of the following (1) to (6):
(1) the street camera 310,
(2) the cameras 181 mounted on the movable waste box 100,
(3) a camera mounted on an onboard PMV (Personal Mobility Vehicle),
(4) a camera mounted on a MaaS (Mobility as a Service),
(5) one or plurality of sensors among a speed sensor, an acceleration sensor, and a position sensor mounted on a movable terminal typified by a smartphone or mobile device owned by a tourist (hereinafter referred to as a movable terminal), and
(6) user information of MaaS, hotels, or shops.

Note that the movable terminal is a terminal device.

### <Street Camera 310>

Other than the vicinity of the shops 320, the street camera 310 may be arranged at a location such as (1) to (4) below:
(1) a passage scheduled path of the movable waste box 100,
(2) a passage scheduled path of the PMV,
(3) a facility people who can emit waste come to and go out from, such as a "hotel, exhibition facility, amusement facility, spa facility, or public hall", and
(4) a place where people pass and waste cannot be left, such as a "tour route, park, forest road, or field" or the vicinity of these places.

### <TypeC>

As illustrated in Fig. 11, based on first image information acquired by the street camera 310, second image information acquired by the cameras 181 of the movable waste box 100, and third image information acquired by the camera mounted on the PMV, the human stream information generating unit 203 recognizes a person from these images and tracks the person. Then, the human stream information generating unit 203 measures items such as a position, speed, or change in position of the tracked person, or the number of people. By measuring these items, from, for example, "human presence density, human average movement speed, human moving direction, and human moving flux" per cubic meter, for each unit space, the human stream information generating unit 203 can generate the human stream information 13 indicating an evaluation index of the human stream. As an evaluation index of the human stream, that is, the human stream information 13, a value for numerical value evaluation of a "level of a degree of off-peak/congestion and density of the moving flux" can be used.

### <Type D>

Also, the human stream information generating unit 203 can generate the human stream information 13 based on the position information and the speed information acquired by the movable terminal owned by the tourist.

### <Type E>

Also, by using at least any of the following (1), (2), and (3), the human stream information generating unit 203 can measure the number of theme-park users (tourists) at a theme park per unit time and can find the human stream information 13 from the number of people for each moving body or each location.
(1) position information of a "moving body such as MaaS or automobile",
(2) the number of passengers getting-on/off a moving body such as a vehicle or train, and
(3) "user information of a user at a facility such as a hotel or shop".

In the following, the operation of the path information generating unit 201 of Embodiment 2 in cooperation with the human stream information generating unit 203 is described.

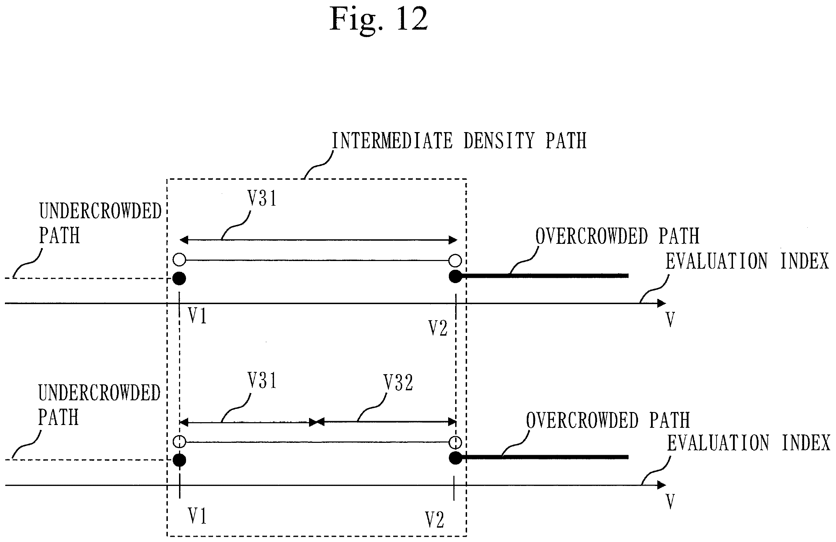

Fig. 12 illustrates number lines indicating values V of the human stream information 13. In the path information generating unit 201, details of number lines of Fig. 12 are set. A path with a value V equal to or smaller than a threshold value V1 is an undercrowded path with less human streams. A path with a value V equal to or larger than a threshold value V2 is an overcrowded path with more human streams. A path with a value between the threshold value V1 and the threshold value V2 is an intermediate density path. The intermediate density paths include one section with a value V represented by one value between V1 and V2 and a plurality of sections with a value V represented by a plurality of values between V1 and V2. The intermediate density path on an upper side of Fig. 12 indicates one section with a value V represented by one value, a value V31. The intermediate density path on a lower side of Fig. 12 indicates two sections with a value V represented by two values, values V31 and V31. In accordance with the undercrowded path passing through an area where the value V is equal to or smaller than the threshold value V1, the overcrowded path passing through an area where the value V is equal to or larger than the threshold value V2, and the intermediate density path passing through one section as an area with the value V being one representative value or a plurality of sections as areas with a plurality of representative values, the path information generating unit 201 schedules pass passage priorities and a passing order. When a larger numerical value of priority is set to have larger priority, in the example of Fig. 12, the path information generating unit 201 sets priority 4 to the overcrowded path, priority 3 to the intermediate density path with V32, priority 2 to the intermediate density path with V32, and priority 1 to the undercrowded path.

For example, the path information generating unit 201 refers to the set priorities and sets path information as a passage route of the movable waste box 100 so that the number of passages of the overcrowded path of the movable waste box 100 increases per unit time or per use time of a facility the tourists use or the number of passages of the undercrowded path decreases per unit time or per use time.

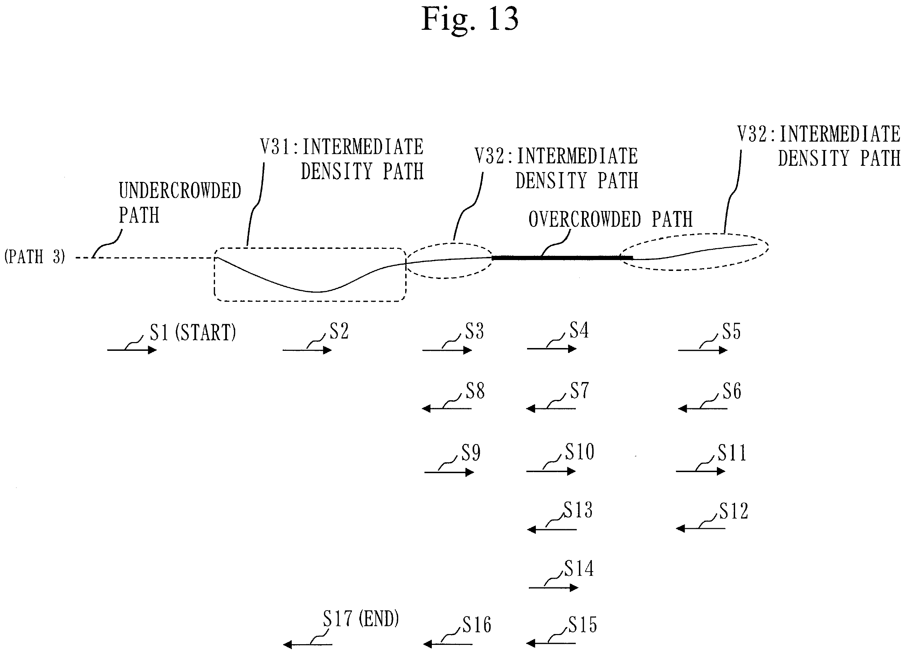

Fig. 13 illustrates an example in which the path information generating unit 201 generates path information formed of, from left, an undercrowded path, an intermediate density path with the value V31, an intermediate density path with the value V32, an overcrowded path, and an intermediate density path with the value V32. In this path information, the order of passage is set. S1 to S17 represents the order of passages. S1 represents a start, and S17 represents an end. According to the path information of Fig. 13, the movable waste box 100 passes the overcrowded path six times, passes each intermediate density path with the value V32 four times, passes the intermediate density path with the value V31 twice, and passes the undercrowded path once. With this, the movable waste box 100 can efficiently collect waste in accordance with density.

### ***Effects of Embodiment 2***

In the waste collection system 1000 of Embodiment 2, the supervision apparatus 200 includes the human stream information generating unit 203 which generates the human stream information 13. And, the path information generating unit 201 generates path information by using the human stream information 13 generated by the human stream information generating unit 203. Thus, the human stream information is generated inside the waste collection system 1000, and path information is generated from the human stream information generated inside the waste collection system 1000. Therefore, correct human stream information necessary for the waste collection system 1000 can be quickly acquired. Also, since path information is generated from the human stream information that is correct for the waste collection system 1000, efficient waste collection can be made. Also, the degree of satisfaction of tourists on a waste emission side is improved.

### Embodiment 3.

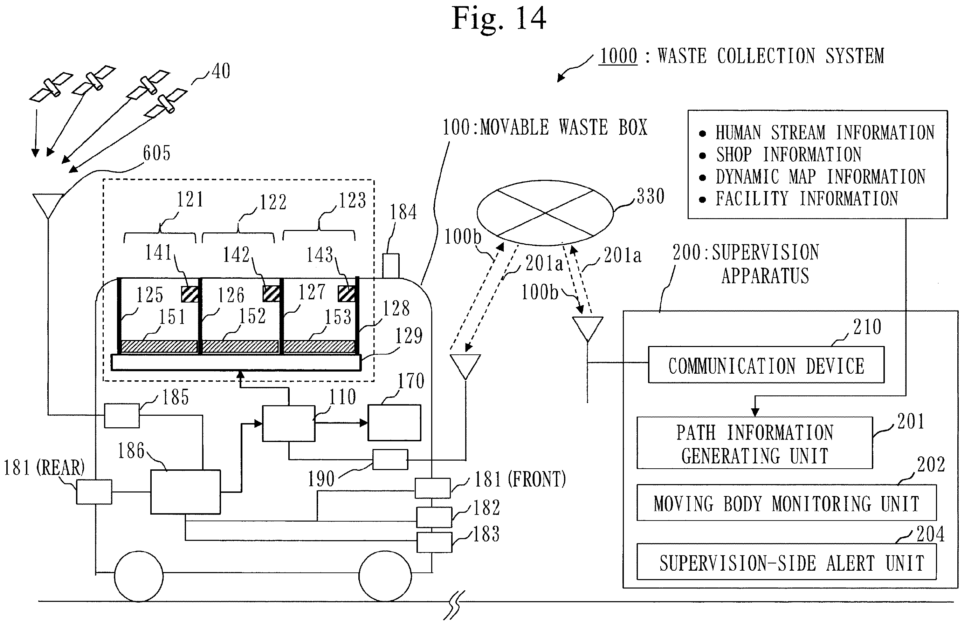

The waste collection system 1000 of Embodiment 3 is described with reference to Fig. 14 to Fig. 16.

The system configuration of the waste collection system 1000 of Embodiment 3 is identical to that of Fig. 1.

Fig. 14 illustrates the configuration of the supervision apparatus 200.

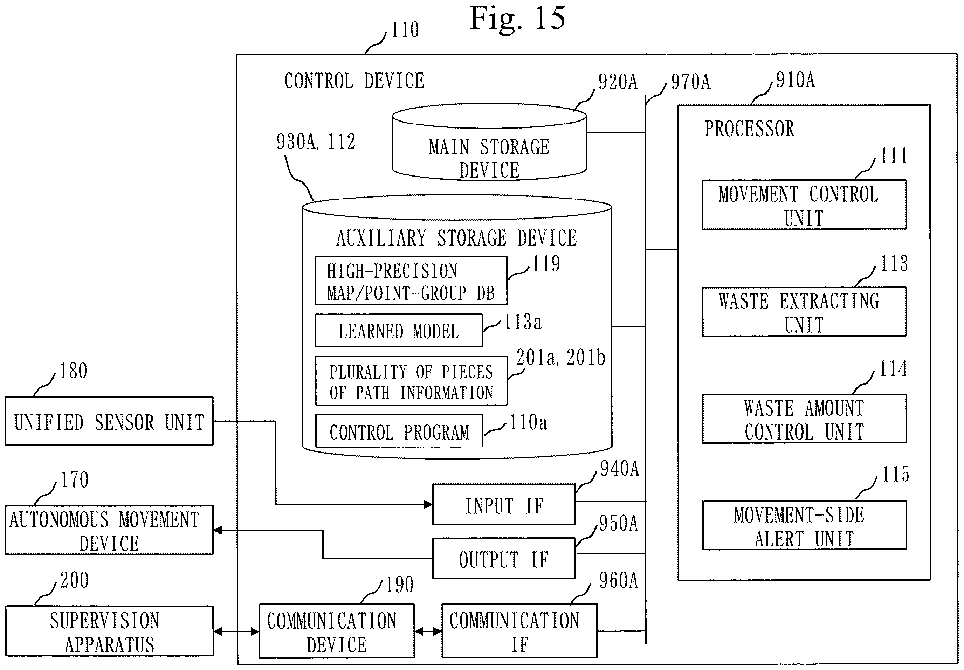

Fig. 15 illustrates the hardware configuration of the control device 110.

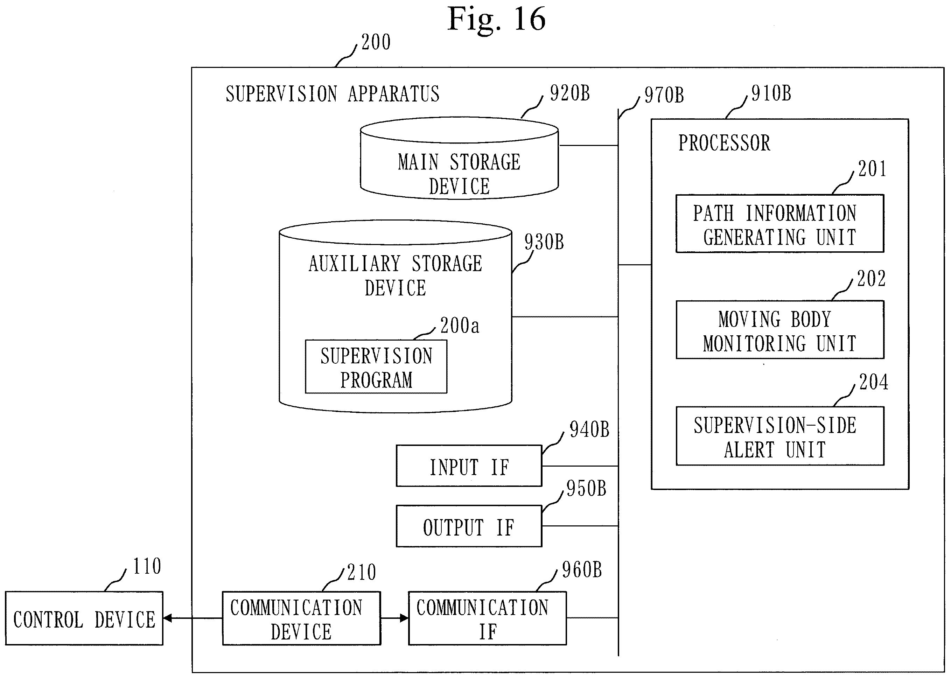

Fig. 16 illustrates the hardware configuration of the supervision apparatus 200. In Embodiment 3, the movable waste box 100 and the supervision apparatus 200 issue an alert in accordance with the weight of waste or the capacity of waste of the movable waste box 100. The movable waste box 100 includes a movement-side alert unit 115 which issues an alert. The supervision apparatus 200 includes a supervision-side alert unit 204 which issues an alert. As illustrated in Fig. 14, weight sensors 151, 152, and 153 are arranged in the separate waste box 121, the separate waste box 122, and the separate waste box 123, respectively. Also, accommodation capacity sensors 141, 142, and 143 are arranged in the separate waste box 121, the separate waste box 122, and the separate waste box 123, respectively. The weight sensors are represented as a weight sensor 150 unless distinction is required. The accommodation capacity sensors are represented as an accommodation capacity sensor 140 unless distinction is required.

### <Movement-Side Alert Unit 115>

The movement-side alert unit 115 issues an alert based on the detection result of the sensor which detects at least any of the weight or the accommodation capacity of waste accumulated in the waste box.

The movement-side alert unit 115 acquires detection information of the weight of waste measured by the weight sensor 150 from the weight sensor 150 or detection information of the accommodation capacity of waste measured by the accommodation capacity sensor 140 from the accommodation capacity sensor 140. The movement-side alert unit 115 determines based on the acquired detection information whether the weight or capacity of waste has a value equal to or larger than an allowable value. If the value of the weight or capacity of waste exceeds the allowable value, the movement-side alert unit 115 outputs an alert sound indicating that the waste box is full to a loudspeaker, not illustrated, connected to the output IF 960A, or sound or display to a display device, not illustrated, connected to the output IF 960A.

### <Supervision-Side Alert Unit 204>

When the weight of waste or the capacity of waste exceeds the allowable value, the movement-side alert unit 115 transmits a full signal indicating that the waste box is filled with waste to the supervision apparatus 200. Upon receiving the full signal, although not illustrated in the drawings, the supervision-side alert unit 204 issues an alert message and an alert sound to a monitoring monitor screen of the supervision system or a loudspeaker of the supervision system.

As for measurement of the accommodation capacity by the accommodation capacity sensor 140 which detects an accommodation capacity, the accommodation capacity can be estimated from an estimated capacity acquired by multiplying the uppermost height of waste by the surface area of the waste box from an image of the inside of the waste box. Alternatively, an optical sensor may be provided on an upper inner surface of the inside of the waste box and, when the optical sensor detects waste, it may be detected that the accommodation capacity is equal to or larger than a predetermined threshold value. In this case, the optical sensor corresponds to the capacity sensor.

### ***Effects of Embodiment 3***

In the waste collection system 1000 of Embodiment 3, the control device 110 includes the movement-side alert unit 115 which issues an alert. Also, the supervision apparatus 200 includes the supervision-side alert unit 204 which issues an alert. Thus, since the user such as a tourist using the movable waste box 100 can know that the waste box is filled with waste, the possibility of throwing waste away into the movable waste box 100 is decreased. Thus, the aesthetic appearance of the movable waste box 100 can be maintained. Also, the waste accommodation capability of the movable waste box 100 can be protected from overflowing. Also, the administrator on a supervision apparatus 200 side which manages the movable waste box 100 can know that the movable waste box 100 is filled with waste. Thus, with the path information generating unit 201 generating a return path and transmitting the return path to the control device 110 of the movable waste box 100 filled with waste, the movable waste box 100 can be caused to be returned to a garage.

### Embodiment 4.

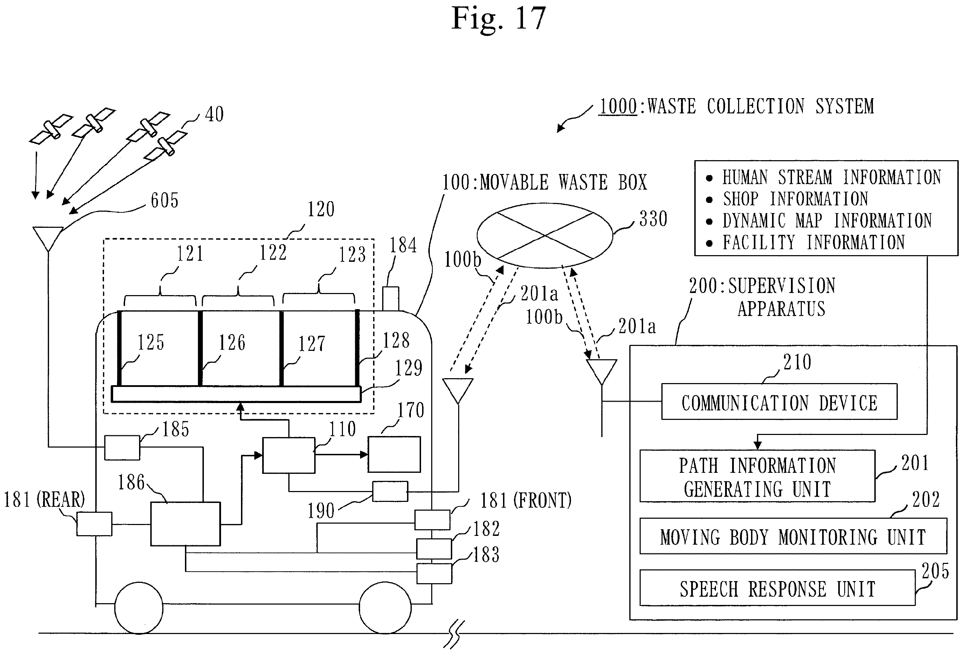

Embodiment 4 is described with reference to Fig. 17 to Fig. 21.

Fig. 17 illustrates the configuration of the supervision apparatus 200.

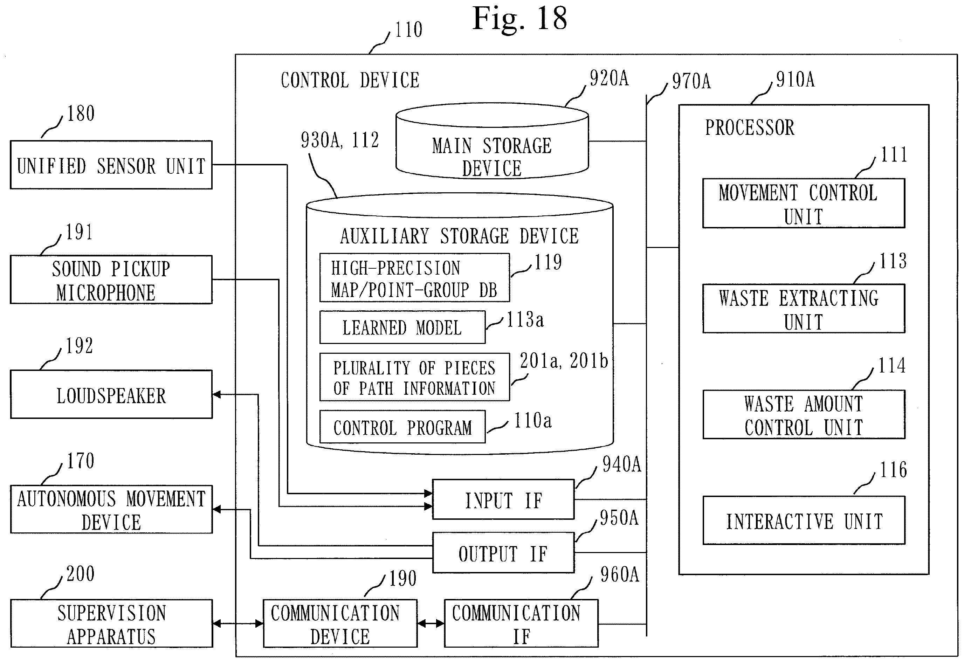

Fig. 18 illustrates the hardware configuration of the control device 110.

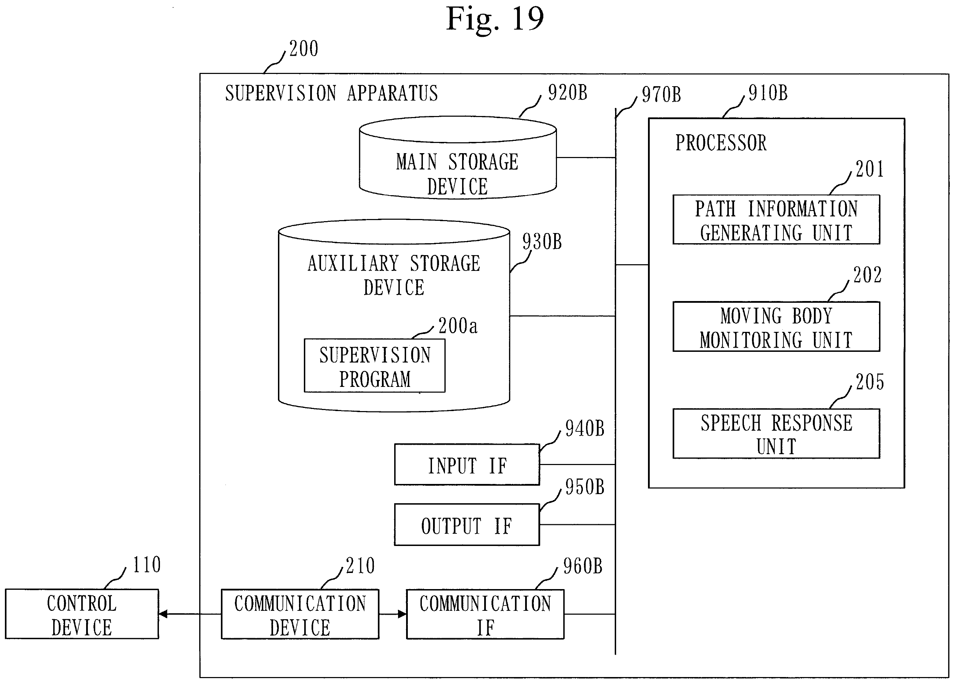

Fig. 19 illustrates the hardware configuration of the supervision apparatus 200.

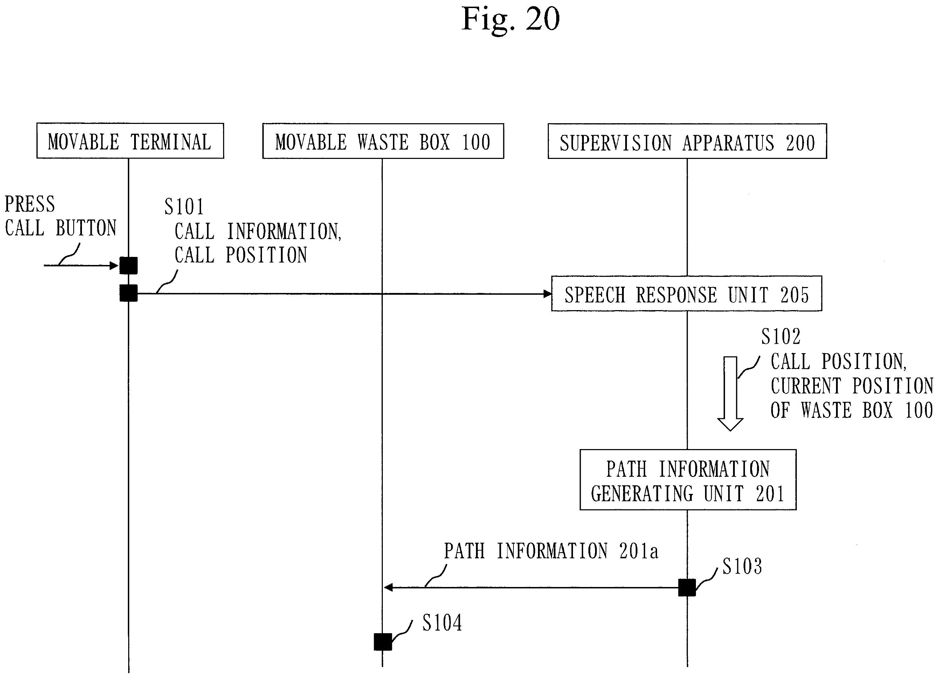

Fig. 20 illustrates an operation sequence of the waste collection system 1000 when call information is transmitted from a movable terminal a tourist 410 has.

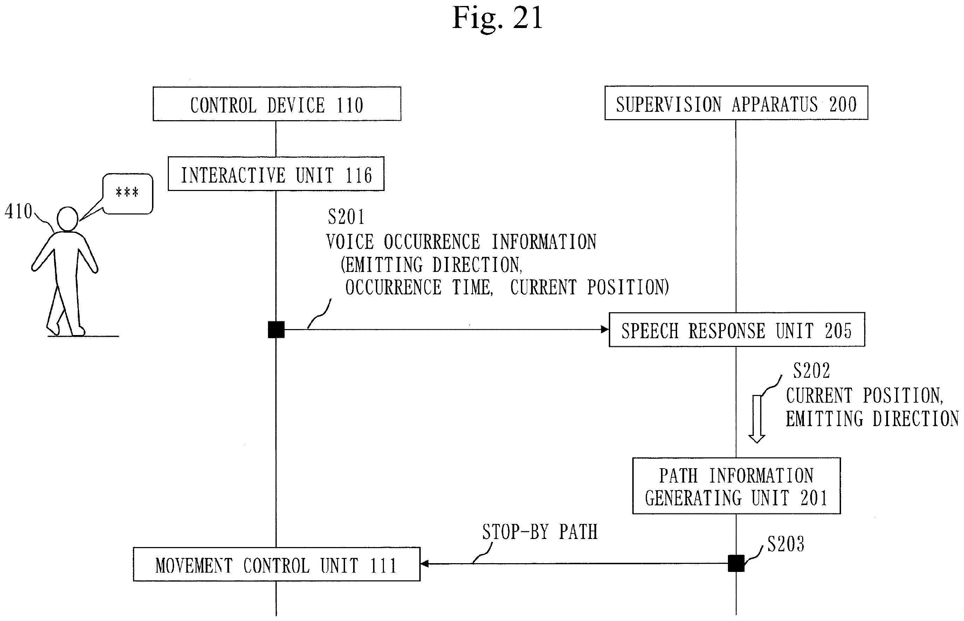

Fig. 21 illustrates an operation sequence of the waste collection system 1000 when the tourist 410 speaks to the movable waste box 100. In the waste collection system 1000 of Embodiment 4, the control device 110 mounted on the movable waste box 100 includes an interactive unit 116, and the supervision apparatus 200 includes a speech response unit 205.

### <Speech Response Unit 205>

In response to speech information from the tourist 410 generated by the speech response unit 205, the path information generating unit 201 generates a path through which the movable waste box 100 moves toward the tourist 410 who made a speech. With reference to Fig. 20, the operation of the waste collection system 1000 when call information is transmitted from a movable terminal the tourist 410 has is described.

### <Step S101>

At step S101, the tourist 410 presses a call button, not illustrated in the drawing, of the owned movable terminal. When the call button is pressed, the movable terminal generates call information for calling the movable waste box 100, and transmits, to the supervision apparatus 200, call information including the call information and a call position, which is the terminal position of the movable terminal when the call button is pressed.

### <Step S102>

At step S102, in the supervision apparatus 200, the communication device 210 receives the call information via the network 330. The call information includes a time. The time is the time of generation of the call information. Based on the call position, the speech response unit 205 identifies the current position of the movable waste box 100 subjected to dynamic monitoring by the supervision apparatus 200. The speech response unit 205 inputs, to the path information generating unit 201, the call position and the identified current position of the movable waste box 100.

### <Step S103>

At step S103, the path information generating unit 201 generates the path information 201a from a path connecting the call position and the current position of the movable waste box 100. The path information generating unit 201 transmits the generated path information 201a to the movable waste box 100 via the communication device 210.

### <Step S104>

At step S104, in the movable waste box 100, the communication device 190 receives the path information 201a via the network 330. In the movable waste box 100, the movement control unit 111 follows the path information 201a to cause a return to the original path via the call position.

### <Interactive Unit 116>

The control device 110 of the movable waste box 100 includes the interactive unit 116. In the movable waste box 100, based on the process result of the interactive unit 116, speech occurrence information may be transmitted to the speech response unit 205 of the supervision apparatus 200. This process is described with reference to Fig. 21.

### <Step S201>

At step S201, the interactive unit 116 receives a voice by audio from the tourist 410 passing in the vicinity of the movable waste box 100. When a voice occurs, the interactive unit 116 performs a voice recognition process on voice information acquired by a sound pickup microphone 191 mounted on the movable waste box 100. Based on the result of the voice recognition process, the interactive unit 116 determines whether the tourist 410 has an intention or desire of throwing waste away. If determining that the tourist 410 has an intention or desire of throwing waste away, the interactive unit 116 estimates an emitting direction of voice of the tourist 410 detected by the sound pickup microphone 191. The interactive unit 116 generates voice occurrence information including the estimated voice emitting direction, a voice occurrence time, and the current position of the movable waste box 100, and transmits the voice occurrence information via the communication device 190.

### <Step S202>

At step S202, the speech response unit 205 inputs the emitting direction of voice and the current position of the movable waste box 100 of the voice occurrence information to the path information generating unit 201.

### <Step S203>

Based on the emitting direction of voice and the current position of the movable waste box 100, the path information generating unit 201 generates a stop-by path from the current position toward the emitting direction of voice. The path information generating unit 201 transmits the stop-by path via the communication device 210 to the movable waste box 100. In the movable waste box 100, the movement control unit 111 of the control device 110 changes the current movement path to the received stop-by path. The movement control unit 111 causes the movable waste box 100 to perform a turning motion toward the stop-by path. After the turning motion, the movement control unit 111 recognizes the person who is present in the emitting direction of voice based on the sensor information detected by at least one of the cameras, the sonar, the millimeter wave radar, the LiDAR, and so forth in the sensor group. The movement control unit 111 tracks the image of the recognized person, and proceeds toward the person being tracked.

Here, while following the stop-by path, the movement control unit 111 prioritizes the tracking motion. That is, assume that the movement control unit 111 determines that the movable waste box 100 is away a set distance or farther from the stop-by path by the tracking motion. In this case, the movement control unit 111 transmits the current position and the tracking direction to the supervision apparatus 200. In the supervision apparatus 200 receiving the current position and the tracking direction, the path information generating unit 201 updates the stop-by path, and transmits the updated stop-by path to the movable waste box 100.

Also, the interactive unit 116 may emit a response voice from a loudspeaker 192 toward the person being tracked. In this case, when a response is provided in response of the response voice from the presence direction of the person being tracked, the movement control unit 111 continues image tracking. Here, the movement control unit 111 may recognize a face image of the person being tracked and check whether the state of the mouth is changed by using facial expression recognition process. When recognizing the presence of a change, the movement control unit 111 may continue tracking. Also, by AI recognition, the movement control unit 111 may determine whether to continue tracking.

Also, at a stage in which the sensor group measures a distance from the person being tracked and the distance from the person being tracked is equal to or smaller than a set value, while causing the movable waste box 100 to perform a turning motion and stop, the movement control unit 111 may emit a voice of prompting the person being tracked to throw waste away from the loudspeaker 192. Emission from the loudspeaker may be performed by the interactive unit 116.

Note that as for image tracking, the movement control unit 111 may perform the tracking process by combining the detection results by the other sensors other than the cameras, such as the sonar, the millimeter wave radar, and the LiDAR. Also, in any of the following (1), (2), and (3), the interactive unit 116 emits a response voice for telling a return to the original path from the loudspeaker.
(1) when the weight sensor 150 detects a change in weight of waste,
(2) when the sensor for waste drop detection 187 detects that waste is thrown away, and
(3) when a set time elapses.

Thereafter, when the interactive unit 116 detects that a voice indicating an intention of a demand for throwing waste away has been emitted from a surrounding person, the interactive unit 116 transmits a signal indicating as such to the movement control unit 111. Upon receiving this signal, the movement control unit 111 continues the stop state of the movable waste box 100 as it is for the set time. Then, when confirming that no voice indicating an intention of a demand for throwing waste away has been emitted from a surrounding person, the interactive unit 117 transmits stop-by stop information indicating that a stop-by has ended and the current position to the speech response unit 205.

When the stop-by stop information and the current position are received, the path information generating unit 201 generates a return path for return to the original movement path from the received current position, and transmits the movement path to the movable waste box 100.

The control device 110 of the movable waste box 100 receives the return path via the communication device 190. The movement control unit 111 causes a return to the original movement path by following the return path. Upon confirming that the position of the movable waste box 100 has been returned on the original movement path or to an allowable range area set in advance and regarded as being on the original movement path, the movement control unit 111 restarts the movement on the original movement path.

### ***Effects of Embodiment 4***

In Embodiment 4, the control device 110 includes the interactive unit 116, and the supervision apparatus 200 includes the speech response unit 205. Thus, for the user of the movable waste box 100 such as the tourist 410, usability of the movable waste box 100 is improved. As a result, beautification of the environment where the movable waste box 100 is used is improved.

In the foregoing, Embodiment 1 to Embodiment 4 have been described.

Among these embodiments, two or more may be combined for implementation. Alternatively, among a plurality of technical matters included in one embodiment, one technical matter may be partially implemented. Alternatively, technical matters included in the respective embodiments may be partially combined for implementation.

### Reference Signs List

13: human stream information; 40: GNSS satellite; 100: movable waste box; 100a: forwarding direction; 100b: waste collection information; 101: tire; 110: control device; 110a: control program; 111: movement control unit; 111a: autonomous movement control information; 112: storage device; 113: waste extracting unit; 113a: learned model; 114: waste amount control unit; 115: movement-side alert unit; 116: interactive unit; 119: high-precision map and point-group database; 120: waste box; 121, 122, 123: separate waste box; 124: separate waste display; 125, 126, 127, 128: partition plate; 129: partition plate driving device; 130, 131, 132, 133: weight sensor; 140, 141, 142, 143: accommodation capacity sensor; 151, 152, 153: weight sensor; 170: autonomous movement device; 171: speed control unit; 172: vehicle direction control unit; 180: unified sensor unit; 181: camera; 182: sonar; 183: millimeter wave radar; 184: LiDAR; 185: GNSS positioning device; 186: sensor fusion unit; 188: unified information; 190: communication device; 191: sound pickup microphone; 192: loudspeaker; 200: supervision apparatus; 200a: supervision program; 201: path information generating unit; 201a: path information; 202: moving body monitoring unit; 203: human stream information generating unit; 204: supervision-side alert unit; 205: speech response unit; 210: communication device; 310: street camera; 320: shop; 330: network; 340: storage warehouse; 400: tourist site; 410: tourist; 401, 402: path; 605: GNSS antenna; 910A, 910B: processor; 920A, 920B: main storage device; 930A, 930B: auxiliary storage device; 940A, 940B: input interface; 950A, 950B: output interface; 960A, 960B: communication interface; 970A, 970B: signal line; 1000: waste collection system

## Claims

1. A moving body to collect waste, the moving body comprising:
a control device having a movement control unit to cause the moving body to autonomously move by following path information indicating a path; and
a waste box to accept waste a person who is present, partway on the path, on the path or along the path has.

2. The moving body according to claim 1, wherein
the moving body further includes a human sensor to detect a movement of a person, and
the movement control unit decreases a speed of the moving body when the human sensor detects a state in which a person approaches the moving body.

3. The moving body according to claim 2, wherein
the movement control unit increases the speed of the moving body when the human sensor detects a state in which a person goes away from the moving body.

4. The moving body according to any one of claims 1 to 3, wherein
the control device has a storage device to store a plurality of pieces of path information, and
the movement control unit selects path information from among the plurality of pieces of path information in accordance with an amount of waste accumulated in the waste box.

5. The moving body according to any one of claims 1 to 4, wherein
the moving body includes an image-taking device to take an image of vicinity, and
the control device has a waste extracting unit to extract, by using a learned model for extracting waste from an image where the waste appears, waste from an image taken by the image-taking device and, when the waste is extracted, to output a waste extraction signal.

6. The moving body according to claim 5, wherein
the waste extracting unit transmits, as the waste extraction signal, an extraction notification for notification of extraction of the waste to a supervision apparatus to manage the moving body.

7. The moving body according to claim 5 or 6, wherein
the moving body includes an arm mechanism to catch and accommodate waste into the waste box, and
when outputting the waste extraction signal, the waste extracting unit causes the waste the image of which has been taken to be accommodated in the waste box by using the arm mechanism.

8. The moving body according to any one of claims 5 to 7, wherein
the learned model is able to extract a person having waste from the image,
the waste extracting unit extracts the person having waste from the image by the image-taking device in vicinity of the path indicated by the path information by using the learned model, and
when the person having waste is extracted from the image by the waste extracting unit, the movement control unit causes the moving body to leave the path and approach the person having the waste.

9. The moving body according to claim 5, wherein
the moving body further includes a waste box monitoring device to monitor the waste box, and
the waste extracting unit determines whether waste with a position changed from inside the waste box to outside the waste box is present by using a monitoring result of the waste box monitoring device.

10. The moving body according to claim 9, wherein
when determining that waste with the position changed from inside the waste box to outside the waste box is present, the waste extracting unit transmits an alert notification to a supervision apparatus to manage the moving body.

11. The moving body according to claim 9 or 10, wherein
the moving body includes an arm mechanism to catch and accommodate waste into the waste box, and
when determining that waste with the position changed from inside the waste box to outside the waste box is present, the waste extracting unit identifies, based on the learned model, the waste with the position changed, and collects the waste with the position changed inside the waste box by using the arm mechanism.

12. The moving body according to any one of claims 1 to 11, wherein
the waste box is divided for each type of waste and classified into a plurality of separate waste boxes in which an accommodation capacity of waste is changed by control, and
the control device includes a waste amount control unit to control the accommodation capacity of waste of each of the separate waste boxes.

13. The moving body according to claim 12, wherein
on each of a plurality of separate waste boxes, the type of waste is displayed.

14. The moving body according to any one of claims 1 to 13, wherein
the control device further includes a movement-side alert unit to issue an alert based on a detection result of a sensor to detect at least either of weight and accommodation capacity of waste accumulated in the waste box.

15. The moving body according to any one of claims 1 to 14, wherein
the movement control unit causes the control device to autonomously move at a speed equal to or slower than 6 km per hour.

16. A waste collection system comprising:
a moving body including a waste box to autonomously move by following path information indicating a path and to accept waste a person who is present, partway of the path, on the path or along the path has; and
a supervision apparatus having a path information generating unit to generate the path information and to transmit the path information to the moving body.

17. The waste collection system according to claim 16, wherein
the path information generating unit generates the path information based on a stream of people in an area where the moving body is scheduled to move.

18. The waste collection system according to claim 16 or 17, wherein
the path information generating unit generates the path information based on a facility including a shop arranged in an area where the moving body is scheduled to move.

19. The waste collection system according to any one of claims 16 to 18, wherein
the supervision apparatus includes a storage device to store waste emission information indicating waste emission situations at a plurality of locations in an area where the moving body is scheduled to move, and
the path information generating unit generates the path information based on the waste emission information stored in the storage device.

20. The waste collection system according to claim 19, wherein
the waste emission information includes time information indicating a time when waste is emitted.

21. The waste collection system according to any one of claims 16 to 20, wherein
the waste collection system includes a plurality of said moving bodies, and
the path information generating unit generates the path information for each of the moving bodies, thereby covering waste collection in a scheduled area where arrangement of the plurality of moving bodies is scheduled.

22. The waste collection system according to claim 17, wherein
the path information includes human stream information indicating the stream of people.

23. The waste collection system according to any one of claims 16 to 22, wherein
the moving body transmits an excess signal to the supervision apparatus when an accommodation capacity of waste in the waste box exceeds a threshold value, and
the path information generating unit transmits a movement destination instruction for making an instruction of a movement destination to a transmission moving body as the moving body transmitting the excess signal to cause the transmission moving body to move to the movement destination and, to replace the transmission moving body by a moving body different from the transmission moving body, transmits path information identical to the path information transmitted to the transmission moving body to the different moving body.

24. The waste collection system according to any one of claims 16 to 23, wherein
the supervision apparatus has a moving body monitoring unit to monitor a movement state of the moving body and to control the movement state of the moving body based on a monitoring result.

25. The waste collection system according to any one of claims 16 to 24, wherein
the supervision apparatus includes a human stream information generating unit to generate human stream information indicating a stream of people, and
the path information generating unit generates the path information by using the human stream information generated by the human stream information generating unit.

26. The waste collection system according to any one of claims 16 to 25, wherein
the moving body includes a control device having a movement-side alert unit to transmit, to the supervision apparatus, a full signal indicating that the waste box is filled with waste based on a detection result of a sensor to detect at least either of weight and accommodation capacity of waste accumulated in the waste box, and
the supervision apparatus includes a supervision-side alert unit to issue an alert when receiving the full signal.

27. The waste collection system according to any one of claims 16 to 26, wherein
the supervision apparatus further includes a speech response unit to acquire call information, which is information transmitted from a terminal device and including a call position, which is a current position of the terminal device, and is information for requesting a call of the moving body and, when acquiring the call information, to acquire a current position of the moving body from a system to monitor the moving body, and
the path information generating unit generates the path information causing the moving body to go toward the call position based on the call position and the current position of the moving body, and transmits the generated path information to the moving body.

28. The waste collection system according to any one of claims 16 to 27, wherein
the moving body includes a control device having an interactive unit to identify an emitting direction of a voice when a person who is present on the path or along the path emits the voice, to generate voice occurrence information including the emitting direction and a current position of the moving body, and to transmit the voice occurrence information to the supervision apparatus,
the supervision apparatus further includes a speech response unit to transmit the emitting direction and the current position to the path information generating unit when receiving the voice occurrence information, and
the path information generating unit generates the path information causing the moving body to go from the current position toward the emitting direction based on the emitting direction and the current position, and transmits the generated path information to the moving body.

29. A supervision apparatus comprising:
a human stream information generating unit to generate human stream information indicating a stream of people; and
a path information generating unit to generate, to a moving body to autonomously move by following path information indicating a path and to include a waste box to accept waste a person who is present partway on the path has, the path information by using the human stream information generated by the human stream information generating unit, and to transmit the generated path information to the moving body.
